# EUROPÄISCHE PATENTSCHRIFT

(11) **EP 3 214 235 B1**
(45) Veröffentlichungstag und Bekanntmachung des Hinweises auf die Patenterteilung: **21.11.2018**
(21) Anmeldenummer: 16000533.6
(22) Anmeldetag: 05.03.2016
(51) Int. Cl.: E04B 1/04, E04B 1/41, F16B 5/02, F16B 43/00

(54) **VERBINDUNGSSYSTEM ZUM VERBINDEN VON BETONFERTIGTEILEN**
CONNECTION SYSTEM FOR CONNECTING PREFABRICATED CONCRETE PARTS
SYSTEME DE CONNECTION DE PIECES PRÉFABRIQUÉES EN BETON

(43) Veröffentlichungstag der Anmeldung: 06.09.2017
(73) Patentinhaber: HALFEN GmbH, 40764 Langenfeld (DE)
(72) Erfinder: Morsink, Richard, 7534 PX Enschede (NL); Albartus, Dirk, 44795 Bochum (DE); Garke, Robert, 99096 Erfurt (DE); van de Schoor, Paulus, 51147 Köln (DE); Heidolf, Thorsten, 99425 Weimar (DE)
(74) Vertreter: Reinhardt, Annette

(56) Entgegenhaltungen:
- EP-A1- 0 566 444
- WO-A1-2008/115083
- DE-A1- 2 219 185
- US-A1- 2009 107 062
- US-A1- 2014 020 321

## Beschreibung

Die Erfindung betrifft ein Verbindungssystem zum Verbinden eines ersten Betonfertigteils mit einem zweiten Betonfertigteil nach dem Oberbegriff des Anspruchs 1.

Bauwerke werden verbreitet aus Betonfertigteilen aufgebaut, die vor Ort durch geeignete Verbindungssysteme miteinander verbunden werden. Solche im Stand der Technik bekannten Verbindungssysteme greifen auf Fertigteilverbinder zurück, die in geeigneter Anzahl und Positionierung bei der Herstellung des jeweiligen Betonfertigteils darin eingegossen werden. Später bei der Montage vor Ort dienen sie der Aufnahme von geeigneten Verbindungselementen. Diese werden vor Ort eingesetzt und festgezogen, wodurch die Betonfertigteile miteinander verbunden werden.

Ein derartiges Verbindungssystem ist beispielsweise aus der DE-OS 26 23 803 bekannt. Das dort gezeigte Verbindungssystem beinhaltet ein Paar von Fertigteilverbindern, wobei je ein solcher Fertigteilverbinder in die aneinander angrenzenden Kantenbereiche zweier Betonfertigteile eingegossen wird. Der jeweilige Fertigteilverbinder umfasst eine Basisplatte mit zwei etwa senkrecht darauf aufgeschweißten Eingießankern, wobei die Eingießanker vollständig und die Basisplatte nur in ihren an die Eingießanker angrenzenden Bereichen in das Betonmaterial eingegossen sind. In ihrem Mittenbereich weist die Basisplatte eine Durchstecköffnung für ein Verbindungselement auf. Der zugehörige Bereich des Fertigteilverbinders liegt unter Verzicht auf einen Betonverguss frei, so dass das Verbindungselement eingesteckt und mittels einer 90°-Drehung vergleichbar zu einem Bajonettverschluss verriegelt werden kann. Als Abschluss des Montagevorgangs wird ein an den Außenflächen verzahnter und im Übrigen konischer Spannkeil eingetrieben, der einerseits eine Rückdrehung und damit ein Lösen des Verbindungselementes verhindert, und der andererseits die beiden Betonfertigteile gegeneinander axial verspannt. Auftretende Betriebslasten werden durch die vorgenannten Eingießanker in die beiden Betonfertigteile eingeleitet.

Obgleich sich eine solche Art der Verbindung zumindest im Prinzip bewährt hat, haben sich doch einige Aspekte als nachteilig herausgestellt. So setzt das vorgenannte Verbindungssystem voraus, dass an jeder Verbindungsstelle ein Paar von insgesamt zwei Fertigteilverbindern eingegossen werden muss, was entsprechende Kosten nach sich zieht. Damit im Stand der Technik die Verspannung vorgenommen werden kann, müssen die beiden zu verbindenden Betonfertigteile exakt gegeneinander ausgerichtet werden. Eine solche exakte Lageausrichtung und deren Beibehaltung insbesondere vor und bei dem Verspannvorgang, aber auch der verspannten Bauteile gegeneinander, sind nur schwierig und mit großem Aufwand herbeizuführen.

Die US 2009/0107062 A1 und die WO 2008/115083 A1 offenbaren Anschluss- bzw. Verbindungselemente mit Basisplatten, Ankern, Durchstecköffnungen und Positioniermitteln. Ein Verbindungssystem für Betonfertigteile ist noch aus EP 0 566 444 A1 bekannt, welches eine Basisplatte mit Eingießankern und mit einer als Langloch ausgeführten Durchstecköffnung für eine Verbindungsschraube umfasst. Die hier vorgesehenen Positioniermittel sind in Form einer Rastplatte und einer Rastverzahnung für eine freie Positionierung und auch für eine formschlüssige Lagefixierung ausgebildet, wirken aber nur in einer Richtung. Betonteilverbinder mit unterschiedlichen Rastrichtungen aufweisenden, geriffelten Rastplatten sind noch aus US 2014/0020321 A1 bekannt.

Der Erfindung liegt die Aufgabe zugrunde, ein gattungsgemäßes Verbindungssystem zum Verbinden von Betonfertigteilen derart weiterzubilden, dass mit verringertem Aufwand eine zuverlässige Positionierung und Lagefixierung der beiden Betonfertigteile gegeneinander möglich ist.

Diese Aufgabe wird durch ein Verbindungssystem mit den Merkmalen des Anspruchs 1 gelöst.

Nach der Erfindung ist vorgesehen, dass das Verbindungssystem einen der hier beschriebenen erfindungsgemäßen Fertigteilverbinder sowie ein zugehöriges Verbindungselement umfasst, wobei der Querschnitt der Durchstecköffnung in der Basisplatte größer ist als der Querschnitt des Verbindungselements. Außerdem weist das Verbindungssystem Positioniermittel zur freien Positionierung und zur formschlüssigen Lagefixierung des durch die Durchstecköffnung hindurchgeführten Verbindungselementes in der Basisebene der Basisplatte auf. Dies erlaubt eine exakte Relativpositionierung vor und während des Verbindungsvorganges, wobei nach festgezogener Verbindung eine entsprechende formschlüssige Lagefixierung der beiden Betonfertigteile nebeneinander zuverlässig aufrechterhalten wird.

Nach der Erfindung ist des Weiteren vorgesehen, dass die Positioniermittel mindestens eine Rastungsplatte umfassen, welche eine Positionieröffnung für die Aufnahme und Positionierung des Verbindungselementes aufweist und auf mindestens einer ihrer Flachseiten mit einer Rastverzahnung versehen ist. Außerdem weist auch die Basisplatte mindestens eine mit der Rastverzahnung der Rastungsplatte korrespondierende Rastverzahnung auf. Die Rastverzahnungen sind derart ausgestaltet, dass sie zwei unterschiedliche und insbesondere in einem rechten Winkel zueinander liegende Rastrichtungen vorgeben. Die zwei unterschiedlichen Rastverzahnungen sind auf den beiden sich gegenüberliegenden Flachseiten der Basisplatte angeordnet, wobei die Positioniermittel zwei zur Anlage an den beiden sich gegenüberliegenden Flachseiten der Basisplatte vorgesehene Rastungsplatten umfassen.

Im unverspannten Zustand können die Rastungsplatte und zusammen mit ihr auch das hindurchgesteckte Verbindungselement beliebig verschoben und positioniert werden. Unter Last, also im verspannten Zustand des Verbindungselementes, greifen jedoch die Rastungen zwischen Rastungsplatte und verzahnter Basisplatte, so dass ein entsprechender Formschluss entsteht. Jedenfalls wird hierdurch ein Formschluss in allen Richtungen der Basisebene der Basisplatte erzeugt. In Verbindung außerdem mit der Kraftübertragung senkrecht zur Basisebene entsteht, ebenso wie bei den oben beschriebenen Exzenterringen, ein dreidimensionaler, räumlicher Formschluss zwischen dem Verbindungselement und dem Fertigteilverbinder, was gleichermaßen zu einem solchen dreidimensionalen Formschluss zwischen den beiden miteinander verbundenen Betonfertigteilen führt.

In einem weiteren vorteilhaften Aspekt der Erfindung ist ein Fertigteilverbinder in das erste Betonfertigteil eingegossen, während in den gegenüberliegenden Bereich des angrenzenden zweiten Betonfertigteils ein Aufnahmeelement für das Verbindungselement eingesetzt ist. Bevorzugt ist das Verbindungselement eine Schraube, während korrespondierend dazu das Aufnahmeelement eine Schraubhülse ist. Das Verbindungselement wird von einer dem Aufnahmeelement bzw. der Schraubhülse gegenüber liegenden Seite der Basisplatte aus durch die Durchstecköffnung hindurchgesteckt und mit dem Aufnahmeelement verbunden bzw. in die Schraubhülse eingeschraubt. Hierdurch ist es möglich, an jeder Verbindungsstelle mit nur einem einzigen Exemplar des erfindungsgemäßen Fertigteilverbinders auszukommen. Außerdem muss das Verbindungselement nur von einer Seite aus, nämlich von der Seite des den Fertigteilverbinder aufnehmenden ersten Betonfertigteils aus, festgezogen werden. Materialeinsatz und Montageaufwand sind minimiert.

Es kann ausreichen, nur an einer Kante oder an zwei aneinander angrenzenden Kanten der Basisplatte einen oder mehrere Eingießanker anzuordnen. In vorteilhafter Weiterbildung der Erfindung grenzt an zwei sich gegenüberliegenden Kanten der Basisplatte jeweils mindestens ein Eingießanker an. Insbesondere sind die beiden genannten Eingießanker spiegelsymmetrisch zu einer Symmetrieebene des Fertigteilverbinders angeordnet. Hierdurch wird vergleichbar zu einer zweischnittigen Verbindung eine symmetrische Krafteinleitung in die Basisplatte herbeigeführt, was zur Entlastung der Konstruktion beiträgt.

In einer bevorzugten Ausführungsform sind zumindest ein Eingießanker und insbesondere alle Eingießanker als gebogenes Rahmenelement ausgebildet, welche insbesondere zusammen mit der Basisplatte einen geschlossenen umlaufenden Rahmen bildet. Bei geringem Materialeinsatz erzeugt der genannte Rahmen eine hohe Verankerungswirkung im Beton.

Ausführungsbeispiele der Erfindung sind nachfolgend anhand der Zeichnung näher beschrieben. Es zeigen:

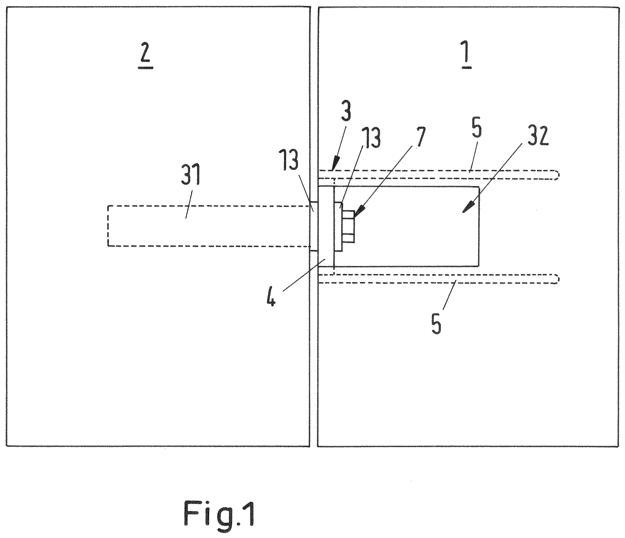

- Fig. 1: in einer schematischen Frontansicht zwei angedeutete Betonfertigteile, wobei in einem ersten Betonfertigteil ein erfindungsgemäß ausgeführter Fertigteilverbinder eingegossen ist, wobei durch diesen hindurch ein Verbindungselement in Form einer Schraube in eine Schraubhülse des zweiten Betonfertigteils eingeschraubt ist, und wobei außerdem Positioniermittel zur formschlüssigen Lagefixierung eingesetzt sind, und

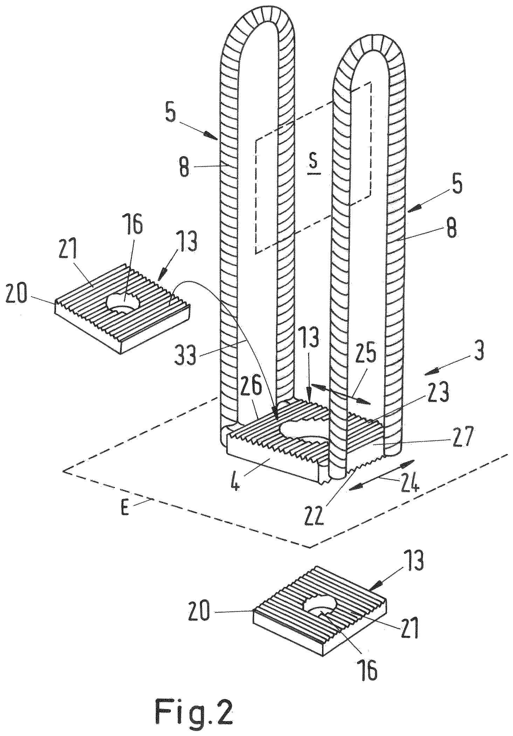

- Fig. 2: in einer perspektivischen Ansicht ein erstes Ausführungsbeispiel des erfindungsgemäßen Fertigteilverbinders mit zwei Rastungsplatten und mit Rastverzahnungen, die in zwei senkrecht zueinander stehenden Richtungen wirken.

Fig. 1 zeigt in einer schematischen Frontansicht zwei miteinander in erfindungsgemäßer Weise verbundene Betonfertigteile 1, 2. Im ersten Betonfertigteil 1 ist ein schematisch angedeuteter, erfindungsgemäß ausgeführter Fertigteilverbinder 3 unter Beibehaltung einer Montagemulde 32 teilweise eingegossen. Es kann zweckmäßig sein, auch in das gegenüberliegende zweite Betonfertigteil 2 einen Fertigteilverbinder 3 analog zum ersten Betonfertigteil 1 einzugießen. In der gezeigten bevorzugten Ausführungsform umfasst jedoch die Verbindungsstelle bzw. das hier zum Einsatz kommende Verbindungssystem nur einen einzigen Fertigteilverbinder 3, welcher in das erste Betonfertigteil 1 eingegossen ist. Im gegenüberliegenden Betonfertigteil 2 ist stattdessen ein Aufnahmeelement eingesetzt, welches hier als Schraubhülse 31 ausgeführt ist.

Der Fertigteilverbinder 3 umfasst eine Basisplatte 4 sowie mindestens einen, hier beispielhaft zwei mit der Basisplatte 4 verbundene Eingießanker 5. Der Fertigteilverbinder 3 ist insoweit in das Betonmaterial des ersten Betonfertigteils 1 eingegossen, dass seine Eingießanker 5 vollständig und die Basisplatte 4 nur abschnittsweise angrenzend an die beiden Eingießanker 5 vom Betonmaterial umschlossen sind. Ein zentraler Abschnitt der Basisplatte 4 liegt frei und begrenzt in Richtung des benachbarten zweiten Betonfertigteils 2 die zum Betrachter hin offene Montagemulde 32. Ein Verbindungselement 7, welches hier als Schraube mit einem beispielhaft sechskantförmigen Schraubkopf ausgebildet ist, wurde bei der Montage in die Montagemulde 32 des ersten Betonfertigteils 1 eingesetzt und von derjenigen Seite der Basisplatte 4 aus, welche dem angrenzenden zweiten Betonfertigteil 2 mit der darin eingesetzten Schraubhülse 31 gegenüberliegt, durch die Basisplatte 4 des Fertigteilverbinders 3 hindurchgesteckt und in die Schraubhülse 31 des zweiten Betonfertigteils 2 eingeschraubt.

Die Schraubhülse 31 kann als eingegossener Hülsen- bzw. Bolzenanker ausgeführt sein. Alternativ kommt aber auch ein in eine geeignete Bohrung nachträglich eingesetzter Dübel in Betracht. Bevorzugt weist die Schraubhülse ein Innengewinde für die Aufnahme eines Außengewindes des Verbindungselementes 7 auf. Es kann aber auch eine selbstschneidende Aufnahme in Betracht kommen. Anstelle der Schraubhülse 31 kann aber auch ein anderes Aufnahmeelement für das Verbindungselement 7 vorgesehen sein. Denkbar ist z.B. im Rahmen der Erfindung, dass das Verbindungselement 7 nicht als Schraube, sondern als Schnellspannelement, Bajonettelement oder dgl. ausgeführt ist, wobei dann das genannte Aufnahmeelement an die Ausgestaltung des Verbindungselementes 7 angepasst ist.

Darüber hinaus sind noch Positioniermittel 13 als Teil des erfindungsgemäßen Verbindungssystems vorgesehen, welche hier nur schematisch angedeutet sind und weiter unten näher beschrieben werden. Sie dienen einer freien Positionierung und einer anschließenden formschlüssigen Lagefixierung des Verbindungselementes 7 relativ zur Basisplatte 4. Sobald das Verbindungselement 7 einseitig mittels eines in die Montagemulde 32 eingeführten Werkzeuges festgezogen ist, sind dann auch die beiden Betonfertigteile 1, 2 relativ zueinander nicht nur kraftschlüssig, sondern auch formschlüssig gegeneinander lagefixiert.

Fig. 2 zeigt in einer perspektivischen Ansicht ein erstes Ausführungsbeispiel des Fertigteilverbinders 3 für das erfindungsgemäße Verbindungssystem nach Fig. 1. In der perspektivischen Ansicht nach Fig.2 ist in Zusammenschau mit Fig. 1 erkennbar, dass die Basisplatte 4 eine Durchstecköffnung 6 für das Verbindungselement 7 aufweist, wobei jedoch der Querschnitt der Durchstecköffnung 6 erheblich größer ist als der Querschnitt des Verbindungselementes 7. Dieser Umstand erlaubt zunächst innerhalb gewisser Grenzen eine freie Relativpositionierung des Verbindungselementes 7 (Fig. 1) relativ zum Fertigteilverbinder 3 wie folgt:

Die formschlüssigen Positioniermittel 13 sind im Ausführungsbeispiel nach Fig. 2 durch eine Kombination mindestens einer Rastungsplatte 20 mit der Basisplatte 4 gebildet. Vorliegend sind zwei identische, aber in unterschiedlichen Orientierungen montierte Rastungsplatten vorgesehen. Die Rastungsplatten 20 sind jeweils mit einer Positionieröffnung 16 für die zumindest näherungsweise spielfreie Aufnahme des Verbindungselementes 7 nach Fig. 1 versehen. Die Anordnung ist hier in Explosionsdarstellung gezeigt. Bei der Montage wird eine erste, hier obere Rastungsplatte 20 entsprechend einem Pfeil 33 auf die Oberseite der Basisplatte 4 aufgelegt. Auf ihrer im montierten Zustand der Basisplatte 4 zugewandten Flachseite ist die Rastungsplatte 20 mit einer Rastverzahnung 21 versehen, während die Basisplatte 4 auf ihrer der Rastungsplatte 20 zugewandten Oberfläche eine dazu korrespondierende Rastverzahnung 23 trägt. Sinngemäß das Gleiche gilt für die zweite, hier untere Rastplatte 20, die bei der Montage gegen die Unterseite der Basisplatte 4 gedrückt wird. Die Basisplatte weist auch auf ihrer der zweiten Rastungsplatte 20 zugewandten Unterseite eine Rastverzahnung 22 auf, die ihrerseits mit der Rastverzahnung 21 der zweiten, unteren Rastungsplatte 20 korrespondiert.

Die Basisplatte 4 liegt in einer Basisebene E. Im gezeigten Ausführungsbeispiel sind alle Rastverzahnungen 21, 22, 23 durch in der Basisebene E jeweils für sich genommen parallel verlaufende Rippen gebildet, wodurch senkrecht zum jeweiligen Rippenverlauf liegende Rastrichtungen 24, 25 vorgegeben sind. Auch die Rastrichtungen 24, 25 liegen in der Basisebene E. Die auf den beiden sich gegenüberliegenden Flachseiten der Basisplatte 4 ausgebildeten Rastverzahnungen 22, 23 unterscheiden sich jedoch bei ansonsten gleicher Geometrie insoweit voneinander, dass sie infolge unterschiedlicher Ausrichtung zwei unterschiedliche und hier im rechten Winkel zueinander liegende Rastrichtungen 24, 25 vorgeben. Solange das Verbindungselement 7 gemäß Fig. 1 noch nicht verspannt ist, kann eine rastende Relativpositionierung der Funktionseinheit aus Verbindungselement 7 und Rastungsplatten 20 relativ zum Fertigteilverbinder 3 vorgenommen werden. Sobald jedoch das Verbindungselement 7 festgezogen wird, entsteht ein Formschluss in der Axialrichtung des Verbindungselementes 7 und auch in den Rastrichtungen 24, 25. Die unterschiedlichen Rastrichtungen 24, 25 ergänzen sich gegenseitig zu einer formschlüssigen Lagefixierung in allen in der Basisebene E der Basisplatte 4 liegenden Richtungen. In Verbindung mit dem axialen Formschluss ergibt sich insgesamt eine dreidimensionale, also in allen räumlichen Richtungen wirkende formschlüssige Lagefixierung des Verbindungselements 7 (Fig. 1) relativ zum Fertigteilverbinder 3, was im festgezogenen Zustand auch zu einer solchen dreidimensionalen formschlüssigen Lagesicherung der beiden montierten Betonfertigteile 1, 2 führt.

Anstelle der gezeigten parallelen Rippen können auch Kreuzverzahnungen oder dgl. an der Basisplatte 4 und an der Rastungsplatte 20 vorgesehen sein. In diesem Falle kann es für die Erzielung der oben beschriebenen dreidimensionalen Lagefixierung ausreichen, nur eine einzige Rastungsplatte 20 einzusetzen.

Ein weiteres erfindungsgemäßes Merkmal des in Fig. 2 dargestellten Fertigteilverbinders 3 betrifft noch die Ausgestaltung des mindestens einen, hier der beiden Eingießanker 5. Es ist erkennbar, dass der Fertigteilverbinder 3 eine senkrecht zur Basisebene E stehende Symmetrieebene S aufweist, wobei die Eingießanker 5 spiegelsymmetrisch zur Symmetrieebene S angeordnet sind. Die Basisplatte 4 weist zwei bezüglich der Symmetrieebene sich gegenüberliegende Kanten 26, 27 auf. An jede der beiden Kanten 26, 27 grenzt jeweils mindestens ein Eingießanker 5, hier jeweils genau ein Eingießanker 5 an. Im Ausführungsbeispiel nach Fig. 2 sind die beiden Eingießanker 5 als aus Rundeisen gebogene Rahmenelemente 8 ausgebildet, welche seitlich an die Grundplatte 4 angeschweißt sind, und welche zusammen mit der Basisplatte 4 jeweils einen geschlossen umlaufenden Rahmen bilden. Anstelle der in Fig. 2 dargestellten geschweißten Bauform des Fertigteilverbinders 3 können aber im Rahmen der Erfindung auch andere Fertigteilverbinder beispielsweise in Form von Blechbiegeteilen und/oder insbesondere in der Ausführungsform nach Fig. 3 im Verbindungssystem gemäß Fig. 1 zum Einsatz kommen.

## Patentansprüche

1. Verbindungssystem zum Verbinden eines ersten Betonfertigteils (1) mit einem zweiten Betonfertigteil (2), mit einem Fertigteilverbinder (3) und mit einem Verbindungselement (7), wobei der Fertigteilverbinder (3) eine Basisplatte (4) und mindestens einen mit der Basisplatte (4) verbundenen Eingießanker (5) zum Eingießen im ersten Betonfertigteil (1) umfasst, wobei die Basisplatte (4) in einer Basisebene (E) liegt und eine Durchstecköffnung (6) für das Verbindungselement (7) aufweist,
wobei der Querschnitt der Durchstecköffnung (6) größer ist als der Querschnitt des Verbindungselementes (7), und wobei das Verbindungssystem Positioniermittel (13) zur freien Positionierung und zur formschlüssigen Lagefixierung des durch die Durchstecköffnung (6) hindurchgeführten Verbindungselementes (7) in allen in der Basisebene (E) der Basisplatte (4) liegenden Richtungen aufweist, **dadurch gekennzeichnet, dass** die Positioniermittel (13) zwei zur Anlage an den beiden sich gegenüberliegenden Flachseiten der Basisplatte (4) vorgesehene Rastungsplatten (20) umfassen, welche eine Positionieröffnung (16) für die Aufnahme und Positionierung des Verbindungselementes (7) aufweisen und auf mindestens einer ihrer Flachseiten mit einer Rastverzahnung (21) versehen sind, und dass zwei unterschiedliche Rastverzahnungen (22, 23) mit unterschiedlichen Rastrichtungen (24, 25) auf den beiden sich gegenüberliegenden Flachseiten der Basisplatte (4) angeordnet sind, welche mit den Rastverzahnungen (21) der Rastungsplatte (20) korrespondieren, wobei die Rastverzahnungen (21, 22, 23) derart ausgestaltet sind, dass sie zwei unterschiedliche Rastrichtungen (24, 25) vorgeben.

2. Verbindungssystem nach Anspruch 1,
**dadurch gekennzeichnet, dass** die Rastverzahnungen (21, 22, 23) derart ausgestaltet sind, dass sie zwei in einem rechten Winkel zueinander liegende Rastrichtungen (24, 25) vorgeben.

3. Verbindungssystem nach Anspruch 1 oder 2,
**dadurch gekennzeichnet, dass** ein Fertigteilverbinder (3) in das erste Betonfertigteil (1) eingegossen ist, dass in den gegenüberliegenden Bereich des angrenzenden zweiten Betonfertigteils (2) ein Aufnahmeelement für das Verbindungselement (7) eingesetzt ist, wobei das Verbindungselement (7) von einer dem Aufnahmeelement gegenüberliegenden Seite der Basisplatte (4) aus durch die Durchstecköffnung (6) hindurch gesteckt und von dort aus mit dem Aufnahmeelement des zweiten Betonfertigteils (2) verbunden ist.

4. Verbindungssystem nach Anspruch 3,
**dadurch gekennzeichnet, dass** das Verbindungselement (7) eine Schraube ist, und dass das im zweiten Betonfertigteil (2) eingesetzte Aufnahmeelement eine Schraubhülse (31) ist, wobei die Schraube von einer der Schraubhülse (31) gegenüberliegenden Seite der Basisplatte (4) aus durch die Durchstecköffnung (6) hindurch gesteckt und in die Schraubhülse (31) eingeschraubt ist.

5. Verbindungssystem nach einem der Ansprüche 1 bis 4,
**dadurch gekennzeichnet, dass** die Basisplatte (4) zwei sich gegenüberliegende Kanten (26, 27) aufweist, und dass an jede der beiden Kanten (26, 27) jeweils mindestens ein Eingießanker (5) angrenzt.

6. Verbindungssystem nach einem der Ansprüche 1 bis 5,
**dadurch gekennzeichnet, dass** der Fertigteilverbinder (3) eine Symmetrieebene (S) aufweist, und dass die Eingießanker (5) spiegelsymmetrisch zur Symmetrieebene (S) angeordnet sind.

7. Verbindungssystem nach einem der Ansprüche 1 bis 6,
**dadurch gekennzeichnet, dass** zumindest ein Eingießanker (5) und insbesondere alle Eingießanker als gebogenes Rahmenelement (8) ausgebildet sind, welche zusammen mit der Basisplatte (4) einen geschlossen umlaufenden Rahmen bilden.

## Claims

1. Connecting system for connecting a first prefabricated concrete part (1) to a second prefabricated concrete part (2), with a prefabricated part connector (3) and with a connecting element (7), wherein the prefabricated part connector (3) comprises a base plate (4) and at least one cast-in anchor (5) connected to the base plate (4) for casting into the first prefabricated concrete part (1), wherein the base plate (4) lies in a base plane (E) and has an insertion opening (6) for the connecting element (7),
wherein the cross-section of the insertion opening (6) is larger than the cross-section of the connecting element (7) and wherein the connecting system has positioning means (13) for the free positioning and the positive location of the connecting element (7) guided through the insertion opening (6) in all directions lying in the base plane (E) of the base plate (4),
**characterised in that** the positioning means (13) comprise two latching plates (20), which are provided for resting against the two opposite flat sides of the base plate (4) and have a positioning opening (16) for the accommodation and positioning of the connecting element (7) and are provided on at least one of their flat sides with a latching toothing (21), and **in that** two different latching toothings (24, 25) corresponding to the latching toothings (21) of the latching plate (20) are arranged on the two opposite flat sides of the base plate (4), the latching toothings (21, 22, 23) being designed to predetermine two different latching directions (24, 25).

2. Connecting system according to claim 1,
**characterised in that** the latching toothings (21, 22, 23) are designed such that they predetermine two latching directions (24, 25) lying at a right angle relative to each other.

3. Connecting system according to claim 1 or 2,
**characterised in that** a prefabricated part connector (3) is cast into the first prefabricated concrete part (1), and **in that** a reception element for the connecting element (7) is installed into the opposite region of the adjoining second prefabricated concrete part (2), wherein the connecting element (7) is inserted through the insertion opening (6) from a side of the base plate (4) located opposite the reception element and from there connected to the reception element of the second prefabricated concrete part (2).

4. Connecting system according to claim 3,
**characterised in that** the connecting element (7) is a screw, and **in that** the reception element installed into the second prefabricated concrete part (2) is a threaded sleeve (31), wherein the screw is inserted through the insertion opening (6) from a side of the base plate (4) located opposite the threaded sleeve (31) and tightened into the threaded sleeve (31).

5. Connecting system according to any of claims 1 to 4,
**characterised in that** the base plate (4) has two opposite edges (26, 27), and **in that** at least one cast-in anchor (5) adjoins each of the two edges (26, 27).

6. Connecting system according to any of claims 1 to 5,
**characterised in that** the prefabricated part connector (3) has a symmetry plane (S), and **in that** the cast-in anchors (5) are arranged mirror-symmetrically to the symmetry plane (S).

7. Connecting system according to any of claims 1 to 6,
**characterised in that** at least one cast-in anchor (5) and in particular all cast-in anchors (5) is/are designed as a curved frame element (8), which forms a closed continuous frame together with the base plate (4).

## Revendications

1. Système de liaison pour relier une première pièce préfabriquée en béton (1) à une seconde pièce préfabriquée en béton (2), avec une attache pour pièces préfabriquées (3) et un élément de liaison (7), l'attache pour pièces préfabriquées (3) comprenant une plaque de base (4) et au moins un ancrage à couler (5), relié à ladite plaque de base (4), à couler dans la première pièce préfabriquée en béton (1), la plaque de base (4) étant située dans un plan de base (E) et présentant une ouverture de passage (6) pour l'élément de liaison (7), la section transversale de l'ouverture de passage (6) étant plus grande que la section transversale de l'élément de liaison (7), et le système de liaison comportant des moyens de positionnement (13) pour le libre positionnement et la fixation par complémentarité de forme de l'élément de liaison (7), passé à travers l'ouverture de passage (6), dans toutes les directions situées dans le plan de base (E) de la plaque de base (4),
**caractérisé en ce que** les moyens de positionnement (13) comprennent deux plaques d'encliquetage (20) qui sont destinées à être appliquées contre les deux côtés plats opposés de la plaque de base (4), qui présentent une ouverture de positionnement (16) pour la réception et le positionnement de l'élément de liaison (7), et qui sont pourvues, sur l'un au moins de leurs côtés plats, d'une denture d'encliquetage (21), et **en ce que** deux dentures d'encliquetage différentes (22, 23) avec des directions d'encliquetage différentes (24, 25) sont disposées sur les deux côtés plats opposés de la plaque de base (4) et correspondent aux dentures d'encliquetage (21) de la plaque d'encliquetage (20), les dentures d'encliquetage (21, 22, 23) étant conçues de telle sorte qu'elles prédéfinissent deux directions d'encliquetage différentes (24, 25).

2. Système de liaison selon la revendication 1,
**caractérisé en ce que** les dentures d'encliquetage (21, 22, 23) sont conçues de telle sorte qu'elles prédéfinissent deux directions d'encliquetage (24, 25) à angle droit l'une par rapport à l'autre.

3. Système de liaison selon la revendication 1 ou 2,
**caractérisé en ce qu'**une attache pour pièces préfabriquées en béton (3) est coulée dans la première pièce préfabriquée en béton (1), **en ce qu'**un élément de réception pour l'élément de liaison (7) est placé dans la zone, située en face, de la seconde pièce préfabriquée en béton (2) voisine, l'élément de liaison (7) étant passé, à partir d'un côté de la plaque de base (4) opposé à l'élément de réception, à travers l'ouverture de passage (6) et, de là, étant relié à l'élément de réception de la seconde pièce préfabriquée en béton (2).

4. Système de liaison selon la revendication 3,
**caractérisé en ce que** l'élément de liaison (7) est constitué par une vis, et **en ce que** l'élément de réception placé dans la seconde pièce préfabriquée en béton (2) est un manchon fileté (31), la vis étant passée, à partir d'un côté de la plaque de base (4) opposé au manchon fileté (31), à travers l'ouverture de passage (6) et étant vissée dans ledit manchon fileté (31).

5. Système de liaison selon l'une des revendications 1 à 4,
**caractérisé en ce que** la plaque de base (4) comporte deux bords opposés (26, 27), et **en ce qu'**au moins un ancrage à couler (5) est voisin de chacun des deux bords (26, 27).

6. Système de liaison selon l'une des revendications 1 à 5,
**caractérisé en ce que** l'attache pour pièces préfabriquées en béton (3) présente un plan de symétrie (S), et **en ce que** les ancrages à couler (5) sont disposés en miroir par rapport au plan de symétrie (S).

7. Système de liaison selon l'une des revendications 1 à 6,
**caractérisé en ce qu'**au moins un ancrage à couler (5) et en particulier tous les ancrages à couler sont conçus comme des éléments de cadre courbes (8) qui forment avec la plaque de base (4) un cadre périphérique fermé.
